# NEUE EUROPÄISCHE PATENTSCHRIFT

(11) **EP 1 160 105 B2**
(45) Veröffentlichungstag und Bekanntmachung des Hinweises auf die Entscheidung über den Einspruch: **13.02.2013**
(45) Hinweis auf die Patenterteilung: 02.08.2006
(21) Anmeldenummer: 00117479.6
(22) Anmeldetag: 12.08.2000
(51) Int. Cl.: B60D 1/06, B60D 1/36, B60D 1/54

(54) **Anhängevorrichtung**
Trailer coupling
Attelage de remorque

(30) Priorität: 02.06.2000 DE 10027573
(43) Veröffentlichungstag der Anmeldung: 05.12.2001
(73) Patentinhaber: SCAMBIA Industrial Developments Aktiengesellschaft, 9494 Schaan (LI)
(72) Erfinder: Henke, Dietfried, 70437 Stuttgart (DE); Riehle, Jörg, 70439 Stuttgart (DE)
(74) Vertreter: Hoeger, Stellrecht & Partner Patentanwälte

(56) Entgegenhaltungen:
- EP-A- 0 872 364
- EP-A- 1 002 671
- EP-A- 1 024 036
- EP-B1- 0 692 396
- WO-A-99/65714
- DE-A- 19 810 378
- US-A- 4 593 264
- US-A- 4 852 901
- US-A- 5 159 312
- US-A- 5 434 552
- US-A- 5 477 207

## Beschreibung

Die Erfindung betrifft eine Anhängevorrichtung für Kraftfahrzeuge, umfassend einen an einer fahrzeugfesten Aufnahme gehaltenen Kugelhals, der an seinem der Aufnahme abgewandten Ende eine Kupplungskugel trägt, einen Sensor zum Erkennen eines an der Kupplungskugel angreifenden Objekts, welcher bei Existenz eines an der Kupplungskugel angreifenden Objekts ein dieses meldendes Signal erzeugt.

Derartige Anhängevorrichtungen sind aus der US 4,593,264 bekannt, wobei der Sensor in der Kupplungskugel angeordnet ist.

Bei derartigen Anhängevorrichtungen besteht stets das Problem, dass der Sensor durch das an der Kupplungskugel zu fixierende Gegenstück des Anhängers betätigt werden muss und diese Betätigung nicht immer zuverlässig erfolgt.

Der Erfindung liegt daher die Aufgabe zugrunde, eine Anhängevorrichtung der gattungsgemäßen Art derart zu verbessern, dass diese sicherer arbeitet.

Diese Aufgabe wird bei einer Anhängevorrichtung der eingangs beschriebenen Art erfindungsgemäß durch die Merkmale des Anspruchs 1 gelöst.

Die erfindungsgemäße Lösung hat den großen Vorteil, dass durch den Sensor die Möglichkeit besteht, zuverlässig zu erkennen, ob ein Objekt auf die Kupplungskugel einwirkt oder nicht, und damit zu entscheiden, ob sicherheitsrelevante Anzeigen aktiviert oder deaktiviert werden sollen oder ob sicherheitsrelevante Funktionen möglich sein sollen.

Beispielsweise ist das Signal dazu einsetzbar, zu entscheiden, ob ein Lösen der Fixierung des Kugelhalses in der Arbeitsstellung erfolgen kann, ohne dass Sicherheitsaspekte vernachlässigt sind und/oder zu entscheiden, ob eine Fixierung des Kugelhalses in der Arbeitsstellung mit der notwendigen Zuverlässigkeit und Sicherheit erfolgen kann.

Um bei fortlaufender Überwachung der Kupplungskugel die Sensoraktivitäten zeitlich zu beschränken, in den Fällen, in denen der Sensor nennenswert Leistung zur Detektion eines an der Kupplungskugel angreifenden Objekts benötigt, oder in den Fällen, in denen der Sensor für die Umgebung oder Bedienungsperson erkennbar arbeitet, ist dem Sensor erfindungsgemäß eine Steuerschaltung zugeordnet, welche den Sensor während Detektionszeitintervallen aktiviert, den vom aktivierten Sensor erkannten Zustand speichert und anschließend den Sensor deaktiviert.

Eine derartige Lösung hat den großen Vorteil, daß der Sensor nicht ständig arbeitet, sondern daß der Sensor beispielsweise nur zu Zeiten aktiviert wird, in denen zu erwarten ist, daß sich eine Änderung des Einwirkungszustandes der Kupplungskugel ergibt oder wenn der Einwirkungszustand der Kupplungskugel beachtlich ist.

Erfindungsgemäß ist vorgesehen, daß der Sensor berührungslos arbeitet.

Der berührungslos arbeitende Sensor ist wie folgt realisierbar. Eine Lösung sieht vor, daß der Sensor als optischer Sensor arbeitet, beispielsweise mit Infrarotstrahlung.

Eine andere Lösung sieht vor, daß der Sensor als Radarsensor arbeitet. Eine weitere Lösung sieht vor, daß der Sensor als Ultraschallsensor arbeitet.

Dabei sind zwei verschiedene Ultraschalldetektionsmethoden möglich, nämlich Detektion über sich in Luft ausbreitenden Ultraschall oder Detektion über sich als Körperschall ausbreitenden Ultraschall.

Hinsichtlich der Anordnung des Sensors zum Erkennen eines an der Kupplungskugel angreifenden oder auf diese einwirkenden Objekts sind die unterschiedlichsten Möglichkeiten denkbar.

Dabei kann der Sensor beispielsweise auf einer Oberfläche des Kugelhalses, beispielsweise in einem Gehäuse, fixiert sein.

Da dem Kugelhals stets eine Steckdose zugeordnet ist, ist es besonders zweckmäßig, den Sensor in der Steckdose anzuordnen, um in einfacher Weise die ohnehin vorhandene Verbindung zur Bordelektrik oder Bordelektronik nutzen zu können.

Eine dem Kugelhals zugeordnete Steckdose kann beispielsweise eine neben dem Kugelhals in konventioneller Weise am Fahrzeug angeordnete Steckdose sein.

Es ist aber auch möglich, die Steckdose nicht seitlich neben dem Kugelhals anzuordnen, sondern die Steckdose an dem Kugelhals selbst anzuordnen. In diesem Fall ist diese Lösung besonders günstig, da mit der am Kugelhals vorgesehenen Steckdose die Möglichkeit besteht, den Sensor möglichst nahe an der Kupplungskugel zu plazieren.

Dabei könnte der Sensor beispielsweise zusätzlich zum Steckdosengehäuse mit diesem verbunden angeordnet sein.

Eine hinsichtlich der Funktionssicherheit und der Herstellbarkeit besonders günstige Lösung sieht jedoch vor, daß der Sensor in die Steckdose integriert ist, das heißt, daß beispielsweise der Sensor und die Steckdose in einem gemeinsamen Gehäuse angeordnet sind.

Eine besonders zweckmäßige Lösung sieht dabei vor, den Sensor bei einer im Kugelhals integrierten Steckdose im Bereich eines über den Kugelhals überstehenden Gehäuseteils vorzusehen.

Eine andere vorteilhafte Möglichkeit der Unterbringung des Sensors sieht vor, daß der Sensor im Kugelhals angeordnet ist, wodurch ein optimaler Schutz für den Sensor gegeben ist.

Hinsichtlich der Detektion eines an der Kupplungskugel angreifenden Objekts sind die unterschiedlichsten Lösungsmöglichkeiten denkbar. So sieht eine vorteilhafte Ausführungsform vor, daß der Sensor über einen seitlich des Kugelhalbes in Richtung der Kupplungskugel verlaufenden Erfassungsbereich die Kupplungskugel erfaßt, wobei vorzugsweise ein vom Erfassungsbereich überdeckter Bereich der Oberfläche der Kupplungskugel erfaßt wird.

Alternativ oder ergänzend dazu sieht ein weiteres Ausführungsbeispiel vor, daß der Sensor das an der Kupplungskugel angreifende Objekt über den sich zwischen dem Sensor und der Kupplungskugel erstreckenden Abschnitt des Kugelhalses detektiert.

Ein derartiges Detektieren kann über eine Vielzahl von Mechanismen erfolgen, die sich auf den Abschnitt des Kugelhalses zwischen dem Sensor und der Kupplungskugel auswirken. Beispielsweise kann dies jegliche Art von Materialbelastung oder Änderung von Materialeigenschaften sein, die über einen hierzu geeigneten Sensor detektiert werden.

Besonders vorteilhaft ist es, die Einwirkung auf die Kupplungskugel über Körperschall zu erfassen, der sich über den zwischen Sensor und Kupplungskugel erstreckenden Abschnitt des Kugelhalses ausbreitet.

Eine weitere Möglichkeit zum Erfassen der Einwirkung eines Objekts auf die Kupplungskugel ist die, den Sensor in der Kupplungskugel selbst anzuordnen, wobei alle Detektionsmöglichkeiten wie z.B. Ultraschall, Infrarot oder mechanische Betätigung möglich sind.

In diesem Fall läßt sich die Einwirkung eines Objekts auf die Kupplungskugel besonders günstig erfassen, allerdings ist in diesem Fall die Kupplungskugel mit den notwendigen Hohlräumen zu versehen.

Besonders günstig läßt sich dies realisieren, wenn der Sensor einen einer Seite der Kupplungskugel zugeordneten Erfassungsbereich aufweist, das heißt, wenn der in der Kupplungskugel angeordnete Sensor beispielsweise einen oberen der Fahrbahn abgewandten Bereich der Kupplungskugel oder auch einen seitlichen Bereich der Kupplungskugel zu detektieren in der Lage ist.

Es ist aber auch denkbar, den Sensor so auszubilden, daß dieser alle wesentlichen Oberflächenbereiche der Kupplungskugel erfaßt, an denen ein Objekt angreifen kann.

Eine besonders vorteilhafte Ausführungsform eines erfindungsgemäßen berührungslos arbeitenden Sensors sieht jedoch vor, daß dieser einen Sender und einen Detektor umfaßt und somit das vom Sender ausgesandte Signal je nach dem, ob ein Objekt am Kugelhals angreift oder nicht, Veränderungen erfährt, die durch den Detektor erfaßbar sind.

Diese Lösung wird insbesondere bei Detektion über Infrarot, Radarwellen oder Ultraschallausbreitung in Luft eingesetzt.

In diesem Fall sind auch die Anordnung des Sensors am Kugelhals oder in der Kupplungskugel nicht nur als Alternativen anzusehen, sondern es können auch beide Fälle auftreten, bei denen ein Teil des Sensors am Kugelhals und der andere in der Kupplungskugel angeordnet ist.

Alternativ zum Vorsehen eines Sensors, welcher einen Sender und einen Detektor umfaßt, besteht auch die Möglichkeit, den Sensor mit einem einzigen Wandler auszustatten.

Ein derartiger Wandler kann beispielsweise sowohl als Sender oder als Empfänger betreibbar sein.

Es besteht aber auch die Möglichkeit, bei Verwenden eines einzigen Wandlers diesen bei der Resonanzfrequenz des Wandlers und der an diesen ankoppelnden Umgebung zu betreiben, wobei die Beeinflussung der Resonanzfrequenz durch körperliche Beeinflussung der ankoppelnden Umgebung des Wandlers erfolgt.

Beispielsweise besteht im Fall eines Ultraschallwandlers die Möglichkeit, die Resonanzfrequenz des Ultraschallwandlers durch die ankoppelnde Umgebung, also beispielsweise durch die nahe an demselben angeordnete und durch Körperschall angekoppelte Kupplungskugel, zu beeinflussen, wobei je nach dem, ob an der Kupplungskugel ein Objekt angreift oder nicht, der Wandler seine Resonanzfrequenz ändert.

Prinzipiell kann der Sensor so ausgebildet sein, daß er alle Objekte erfaßt, die an der Kupplungskugel angreifen.

Es ist aber auch im Rahmen der erfindungsgemäßen Lösung der Fall denkbar, daß der Sensor als an der Kupplungskugel angreifendes Objekt nur ein Kugelkupplungsstück oder ein ähnlich nachhaltig an der Kupplungskugel angreifendes Objekt erfaßt, welches zur Verbindung eines Anhängers mit der erfindungsgemäßen Anhängevorrichtung dient und in bekannter Weise die Kupplungskugel umgreift.

Beispielsweise sieht diese Sensorsteuerschaltung vor, daß eine Aktivierung des Sensors bei Anliegen eines Startsignals für die Sensorsteuerschaltung erfolgt, dann den Einwirkungszustand der Kupplungskugel erfaßt und speichert und schließlich eine Deaktivierung des Sensors erfolgt.

Hinsichtlich der Speicherzeitdauer sind die unterschiedlichsten Möglichkeiten denkbar.

Beispielsweise ist es denkbar, den vom Sensor erkannten Einwirkungszustand für eine definierte Zeit nach Deaktivierung des Sensors noch zu speichern und somit erkennbar zu halten.

Eine besonders günstige Lösung sieht vor, daß die Sensorsteuerschaltung den vom aktivierten Sensor erkannten Einwirkungszustand so lange speichert, bis eine erneute Aktivierung des Sensors erfolgt.

Um mit einem erfindungsgemäßen Sensor über einen gewissen Zeitraum den Einwirkungszustand der Kupplungskugel überprüfen zu können, ist vorzugsweise vorgesehen, daß die Sensorsteuerschaltung nach einem festlegbaren Zeitintervall den Sensor erneut aktiviert und den von diesem erfaßten Zustand speichert.

Dabei ist es denkbar, dieses Zeitintervall fest vorzugeben, so daß nach Deaktivierung des Sensors das Zeitintervall abgewartet wird und dann selbständig durch die Sensorsteuerschaltung eine erneute Aktivierung des Sensors erfolgt.

Dies hätte jedoch zur Konsequenz, daß eine einmal gestartete Sensorsteuerschaltung stets nach Ablauf des Zeitintervalls erneut den Sensor aktiviert, so lange bis die Sensorsteuerschaltung abgeschaltet wird.

Noch vorteilhafter ist es jedoch, wenn die Sensorsteuerschaltung das Zeitintervall nach festgelegten Zeiträumen verändert.

So ist es beispielsweise denkbar, nach einem Startsignal für die Sensorsteuerschaltung zunächst während eines ersten Zeitraums stets nach kurzen Zeitintervallen den Sensor erneut zu aktivieren, dann jedoch nach Ablauf dieses ersten Zeitraums die Zeitintervalle zu vergrößern und beispielsweise während eines zweiten Zeitraums den Sensor stets nach Ablauf der verlängerten Zeitintervalle erneut zu aktivieren.

Um insbesondere während Standzeiten des Kraftfahrzeugs oder längerer Fahrten Leistung zu sparen, ist es ferner vorteilhaft, wenn die Sensorsteuerschaltung nach Ablauf eines aktiven Modes in einen inaktiven Mode übergeht, in welchem keine selbständige Aktivierung des Sensors mehr erfolgt.

In diesem Fall erfolgt somit während des aktiven Modes stets ein selbständiges Aktivieren des Sensors nach Ablauf des jeweils festgelegten Zeitintervalls und am Ende des aktiven Modes, dessen Zeitraum ebenfalls festlegbar ist, ein Übergang in den inaktiven Mode, in welchem keine selbständige Aktivierung des Sensors mehr erfolgt, so lange bis die erfindungsgemäße Sensorsteuerschaltung wieder ein Startsignal erhält.

Eine weitere vorteilhafte Lösung sieht vor, daß die Sensorsteuerschaltung das Zeitintervall ereignisabhängig festlegt, das heißt, daß die Sensorsteuerschaltung in der Lage ist, unterschiedliche Ereignisse zu unterscheiden und je nach Ereignis das Zeitintervall festlegt.

Ein derartiges Ereignis wäre beispielsweise der Übergang des Kugelhalses von der Ruhestellung in die Arbeitsstellung, ein anderes Ereignis wäre ein Abstellen des Kraftfahrzeugs und ein weiteres Ereignis wäre eine Aktivierung einer Bewegung des Kugelhalses von der Ruhestellung in die Arbeitsstellung. Je nach dem jeweiligen Ereignis könnte somit eine Überprüfung des Zustandes der Kupplungskugel nach unterschiedlichen, von der Sensorsteuerung festgelegten Zeitintervallen für bestimmte Zeiträume erfolgen.

Besonders zweckmäßig läßt sich die erfindungsgemäße Anhängevorrichtung dann einsetzen, wenn die Anhängevorrichtung eine Fixiereinrichtung aufweist, welche zur Fixierung des Kugelhalses in der Arbeitsstellung aktivierbar und zum Lösen der Fixierung deaktivierbar ist. In diesem Fall läßt sich das Signal des Sensors dazu verwenden zu entscheiden, ob die Fixiereinrichtung zu Lösen oder zum Fixieren freigegeben werden soll und insbesondere auch, um zu entscheiden, ob nach Betätigung der Fixiereinrichtung ein sicherheitsunbedenklicher Zustand erreicht werden kann oder nicht.

Eine besonders bevorzugte Ausführungsform der erfindungsgemäßen Anhängevorrichtung sieht vor, daß der Kugelhals mittels eines Antriebs zwischen einer Arbeitsstellung und einer Ruhestellung bewegbar ist und in der Arbeitsstellung mit der Fixiereinrichtung festlegbar ist, daß eine Steuerung vorgesehen ist, mit welcher die Bewegung und Fixierung steuerbar ist und daß die Steuerung ein Zustandssignal des Sensors erfaßt und bei Vorliegen eines einem an der Kupplungskugel einwirkenden Objekt entsprechenden Zustandssignals ein Lösen der Fixierung in der Arbeitsstellung verhindert.

Darüber hinaus sind auch noch weitere Funktionsmerkmale unter Heranziehen des erfindungsgemäßen Sensors denkbar.

Beispielsweise ist es denkbar, das Signal des Sensors dahingehend auszunutzen, dem Benutzer des Kraftfahrzeugs ein an der Kupplungskugel angreifendes Objekt ständig zu melden.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine schematische Ansicht von hinten eines ersten Ausführungsbeispiels einer erfindungsgemäßen Anhängevorrichtung;
- Fig. 2: einen Schnitt längs Linie 2-2 in Fig. 1;
- Fig. 3: eine Draufsicht auf das erste Ausführungsbeispiel der erfindungsgemäßen Anhängevorrichtung in Richtung des Pfeils A in Fig. 1;
- Fig. 4: eine schematische vergrößerte Darstellung des Bereichs B in Fig. 3;
- Fig. 5: eine vergrößerte ausschnittsweise Darstellung des Kugelhalses des ersten Ausführungsbeispiels der erfindungsgemäßen Anhängevorrichtung entsprechend Fig. 2;
- Fig. 6: eine vergrößerte ausschnittsweise Darstellung des Kugelhalses des ersten Ausführungsbeispiels entsprechend Fig. 1;
- Fig. 7: eine Darstellung einer in den Kugelhals integrierten Steckdose beim ersten Ausführungsbeispiel;
- Fig. 8: eine schematische Darstellung eines Erfassungsbereichs eines Sensors beim ersten Ausführungsbeispiel;
- Fig. 9: eine schematische Darstellung des Erfassungsbereichs des ersten Ausführungsbeispiels bei Blick in Richtung C in Fig. 8;
- Fig. 10: eine schematische Darstellung des Erfassungsbereichs in der Ansicht gemäß Fig. 2 bei einem an der Kupplungskugel angreifenden Kugelkupplungsstück eines Anhängers;
- Fig. 11: eine schematische Darstellung einer Einwirkung eines Fremdobjekts, beispielsweise eines Schuhs, auf die Kupplungskugel;
- Fig. 12: eine schematische Darstellung des Senders gemäß dem ersten Ausführungsbeispiel mit Darstellung des Erfassungsbereichs;
- Fig. 13: eine schematische Darstellung eines Zusammenwirkens des Sensors mit einer Sensorsteuerschaltung und einer Steuerung für die Anhängevorrichtung;
- Fig. 14: eine schematische Darstellung von Detektionszeitintervallen, detektierten Signalen und Zustandsintervallen beim ersten Ausführungsbeispiel;
- Fig. 15: einen Längsschnitt durch eine Steckdose mit Sensor beim ersten Ausführungsbeispiel;
- Fig. 16: eine Schaltskizze einer Variante des ersten Ausführungsbeispiels mit in einer Versorgung der Steckdose angeordnetem Sensor;
- Fig. 17: eine schematische Darstellung eines zweiten Ausführungsbeispiels;
- Fig. 18: eine schematische Darstellung eines Kugelhalses eines dritten Ausführungsbeispiels in der Ansicht gemäß Fig. 5;
- Fig. 19: eine schematische Darstellung des Kugelhalses des dritten Ausführungsbeispiels mit angreifendem Kugelkupplungsstück;
- Fig. 20: eine schematische Darstellung eines Kugelhalses eines vierten Ausführungsbeispiels in der Ansicht gemäß Fig. 5;
- Fig. 21: eine schematische Darstellung des Kugelhalses des vierten Ausführungsbeispiels mit angreifendem Kugelkupplungsstück;

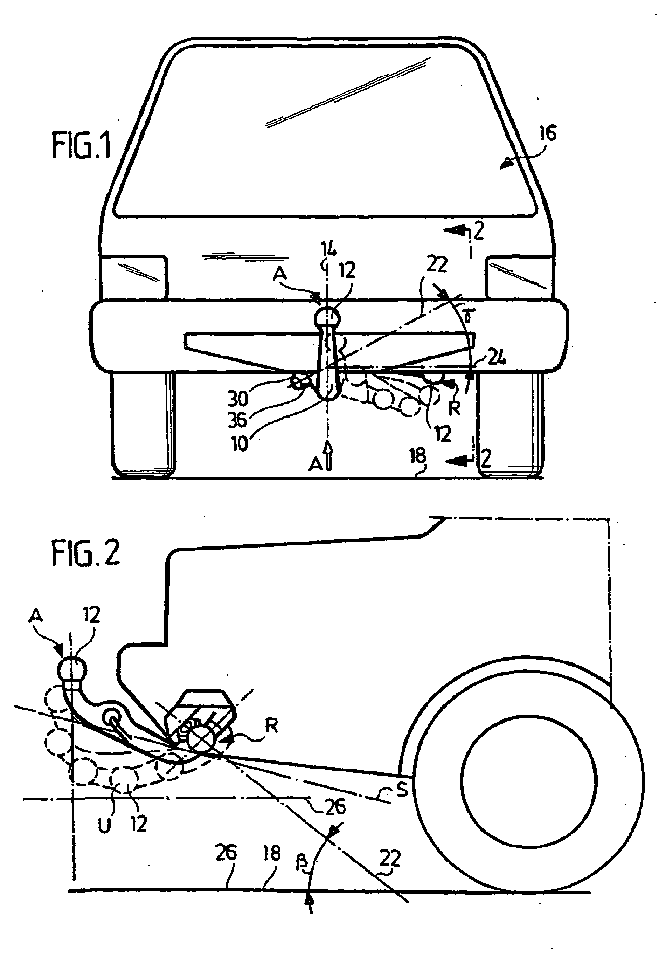

Eine in Fig. 1 dargestellte erfindungsgemäße Anhängevorrichtung umfaßt einen Kugelhals 10 mit einer Kupplungskugel 12, wobei der Kugelhals in einer Arbeitsstellung A sich in einer Längsmittelebene 14 eines Kraftfahrzeugs 16 erstreckt und die Kupplungskugel 12 auf einer einer Fahrbahn 18 abgewandten Seite des Kugelhalses 10 steht.

Dieser Kugelhals 10 ist bei dem ersten Ausführungsbeispiel der erfindungsgemäßen Anhängevorrichtung von einer Arbeitsstellung A in eine Ruhestellung R schwenkbar, wobei die Schwenkachse beliebig ausgerichtet sein kann.

Die Schwenkachse kann senkrecht zur Längsmittelebene 14 in horizontaler Richtung verlaufen, die Schwenkachse kann in der Längsmittelebene 14 in ungefähr vertikaler Richtung verlaufen.

Bei dem ersten Ausführungsbeispiel ist, wie in Fig. 1, 2 und 3 dargestellt, die mit 22 bezeichnete Schwenkachse in einem Winkel α gegenüber der Längsmittelebene 14 des Kraftfahrzeugs 16 verlaufen zu lassen, wobei der Winkel α im Bereich von ungefähr 40° bis ungefähr 70° liegt und die Schwenkachse 22 in einem Winkel β relativ zur in der Längsmittelebene 14 liegenden Horizontalen 26 verlaufen zu lassen, wobei der Winkel β im Bereich von ungefähr 30° bis ungefähr 50° liegt, und außerdem die Schwenkachse 22 in einem Winkel γ gegenüber einer senkrecht auf der Längsmittelebene 14 stehenden Horizontalen 24 verlaufen zu lassen, wobei der Winkel γ im Bereich von ungefähr 20° bis ungefähr 40° liegt.

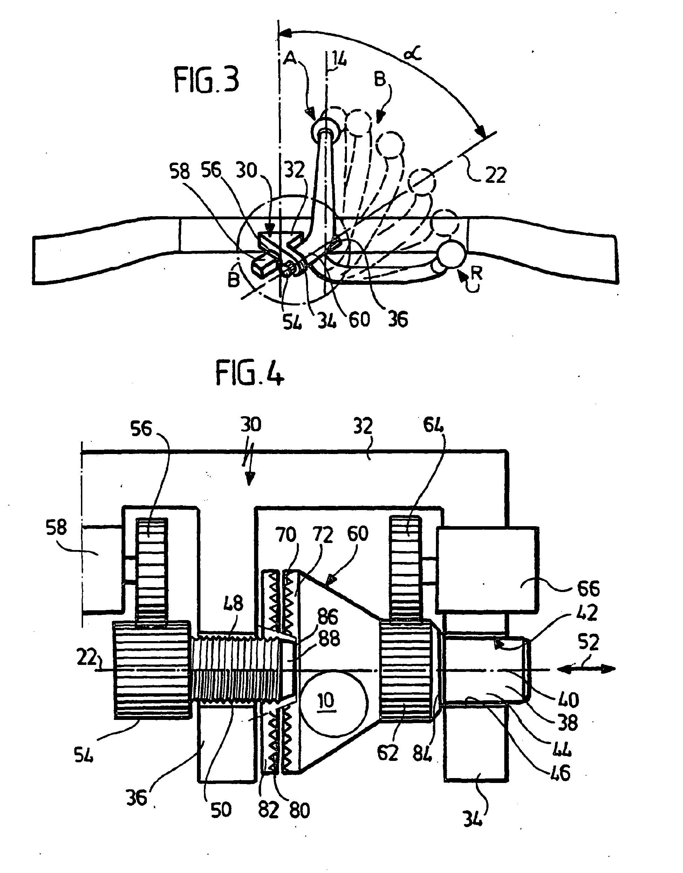

Das erste Ausführungsbeispiel einer erfindungsgemäßen Anhängekupplung, dargestellt in Fig. 3 und 4, umfaßt nun zur drehbaren Lagerung des Kugelhalses 10 um die Schwenkachse 22 einen Schwenklagerkörper 30, welcher beispielsweise eine Basis 32 und zwei von der Basis 32 abstehende Lagerwangen 34 und 36 umfaßt.

In den Lagerwangen 34 und 36 ist ein Lagerzapfen 38 um seine Achse 40 drehbar gelagert, wobei die Achse 40 die Schwenkachse 22 für den Kugelhals 10 darstellt.

Dabei erfolgt die Lagerung des Lagerzapfens 38 in der Lagerwange 34 beispielsweise mittels eines Gleitlagers 42, gebildet durch eine Umfangsfläche 44 des Lagerzapfens 38 und eine Lagerbohrung 46 in der Lagerwange 34.

Ferner trägt der Lagerzapfen 38 in seinem die Lagerwange 36 durchsetzenden Abschnitt ein Außengewinde 48, welches in ein Innengewinde 50 in der Lagerwange 36 eingreift, so daß ein Drehen des Lagerzapfens 38 dazu führt, daß sich aufgrund der ineinandergreifenden Gewinde 48 und 50 der Lagerzapfen 40 in einer Richtung 52 parallel zur Achse 40 relativ zu den Lagerwangen 34 und 36 verschieben läßt.

Zum drehbaren Antrieb des Lagerzapfens 38 ist dieser auf einer der Lagerwange 34 gegenüberliegenden Seite der Lagerwange 36 mit einem Antriebsritzel 54 versehen, in welches ein Ritzel 56 eingreift, das durch einen Antrieb 58 antreibbar ist, wobei der Antrieb 58 vorzugsweise einen Elektromotor mit einem Untersetzungsgetriebe umfaßt.

Auf dem Lagerzapfen 38 sitzt zwischen der Lagerwange 34 und der Lagerwange 36 ein als Ganzes mit 60 bezeichnetes Schwenkelement, welches drehfest mit einem Schwenkritzel 62 verbunden ist, das seinerseits durch ein Ritzel 64 antreibbar ist, um eine Schwenkbewegung des Schwenkelements 60 um die Schwenkachse 62 einzuleiten. Hierzu ist das Ritzel 64 durch einen Schwenkantrieb 66 angetrieben, welcher vorzugsweise ebenfalls einen Elektromotor mit einem Untersetzungsgetriebe umfaßt.

Ferner trägt das Schwenkelement 60 auf seiner der Lagerwange 36 zugewandten Seite einen mit ersten Formschlußelementen 70 versehenen Träger 72, welcher im einfachsten Fall als Verzahnungsring ausgebildet und konzentrisch zur Achse 40 des Lagerzapfens 38 angeordnet ist.

Der Träger 72 ist dabei drehfest und in Richtung 52 unverschieblich mit dem Schwenkelement 60 verbunden, an welches außerdem der Kugelhals 10 angeformt ist.

Im einfachsten Fall sind der Kugelhals 10, das Schwenkelement 60 und der Träger 72 mit den ersten Formschlußelementen 70 als einstückiges Teil ausgebildet.

Ferner ist an der Lagerwange 36, und zwar auf ihrer dem Träger 72 mit den ersten Formschlußelementen 70 zugewandten Seite, ein zweite Formschlußelemente 80 aufweisender Träger 82 angeordnet, wobei die zweiten Formschlußelemente 80 den ersten Formschlußelementen 70 zugewandt sind und die ersten Formschlußelemente 70 und die zweiten Formschlußelemente 80 so ausgebildet sind, daß diese eine formschlüssige und spielfreie Verbindung miteinander eingehen können, um das Schwenkelement 60 spielfrei drehfest relativ zur Lagerwange 36 festzulegen.

Beispielsweise ist der Träger 82 als separates Teil ausgebildet, welches drehfest und in Richtung 52 unverschieblich mit der Lagerwange 36 verbunden ist. Es ist aber auch denkbar, den zweiten Träger 82 mit den zweiten Formschlußelementen 80 einstückig an die Lagerwange 36 anzuformen.

Außerdem ist der Lagerzapfen 38 auf einer dem Schwenkritzel 62 zugewandten Seite mit einer Schulter 84 versehen, welche in der Lage ist, das Schwenkritzel 62 zusammen mit dem Schwenkelement 60 in Richtung der Lagerwange 36 zu verschieben.

Darüber hinaus ist der Lagerzapfen 38 noch ferner mit einer Schulter 86 versehen, welche beispielsweise durch einen aufgesetzten Ring 88 gebildet ist und dazu dient, das Schwenkelement 60 in Richtung der Lagerwange 34 zu verschieben.

Somit sind das Schwenkelement 60 und das Schwenkritzel 62 gemeinsam zwar drehbar, jedoch in Richtung 52 im wesentlichen unverschieblich auf dem Lagerzapfen 38 gelagert.

Zum drehfesten Festlegen der jeweiligen Schwenkstellung des Schwenkelements 60 relativ zur Lagerwange 36 und somit relativ zum Kraftfahrzeug wird nun der Antrieb 58 in Gang gesetzt, welcher über das Ritzel 56 das Antriebsritzel 54 antreibt und somit in der Lage ist, den Lagerzapfen 38 in Richtung 52 zu verschieben, und zwar entweder so, daß die Formschlußelemente 70 und 80 miteinander in Eingriff kommen, oder so, daß diese außer Eingriff kommen, wobei stets das Ritzel 64 und das Schwenkritzel 62 in Eingriff bleiben.

Sind die Formschlußelemente 70 und 80, wie in Fig. 4 dargestellt, außer Eingriff, so besteht die Möglichkeit, über den Schwenkantrieb 66 und das Ritzel 64 das Schwenkritzel 62 anzutreiben und somit das Schwenkelement 60 mitsamt dem Kugelhals 10 von der Arbeitsstellung A in die Ruhestellung R oder umgekehrt zu verschwenken, wobei die Arbeitsstellung A und die Ruhestellung R beispielsweise durch Endschalter erfassbar sind, so daß bei Erreichen der jeweiligen Stellung ein Stillsetzen des Schwenkantriebs 66 und somit ein Festhalten der Schwenkstellung erfolgen kann.

Je nach dem ob der Kugelhals 10 in der Arbeitsstellung A oder in der Ruhestellung R steht, besteht nun durch Betätigen des Antriebs 58 die Möglichkeit, die Formschlußelemente 70 und 80 miteinander in Eingriff zu bringen, wobei der Lagerzapfen 38 das Schwenkritzel 62 und das Schwenkelement 60 in Richtung der Lagerwange 36 beaufschlagt und diese soweit in Richtung der Lagerwange 36 schiebt, bis die ersten Formschlußelemente 70 spielfrei in die zweiten Formschlußelemente 80 eingedrückt sind.

Damit ist das Schwenkelement 60 mitsamt den Trägern 72 und 82 und den Formschlußelementen 70 und 80 gegen die Lagerwange 26 verspannt, wobei der Lagerzapfen 10 seinerseits durch das Außengewinde 48 in Richtung 52 in dem Innengewinde 50 in der Lagerwange 36 fixiert ist und somit dazu dient, die in axialer Richtung 52 desselben wirksamen Zugkräfte aufzubringen und damit eine spielfreie Fixierung des Schwenkelements 60 durch Verspannen gegen die Lagerwange 36 erreicht.

Bei der erfindungsgemäßen Anhängevorrichtung ist der Kugelhals 10 in einem Bereich zwischen der Kupplungskugel 12 und dem Schwenklagerkörper 30 mit einer Aufnahme 90 für ein Gehäuse 92 einer als Ganzes mit 94 bezeichneten Steckdose versehen, wobei das Gehäuse 92 auf einer Seite mit einem Deckel 96 versehen ist und auf einer gegenüberliegenden Seite mit einer Abschlußkappe 98.

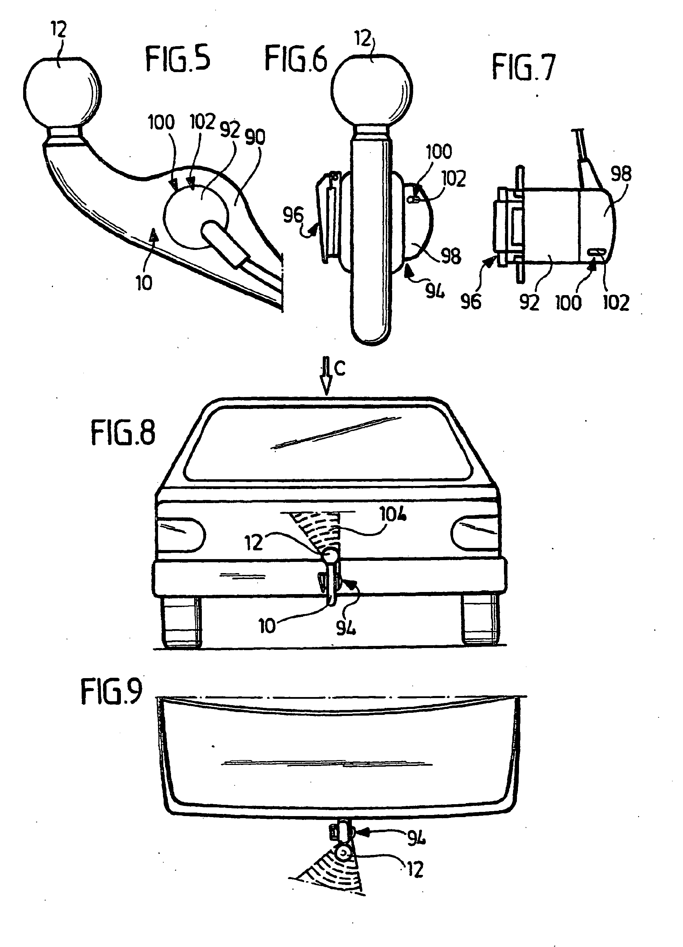

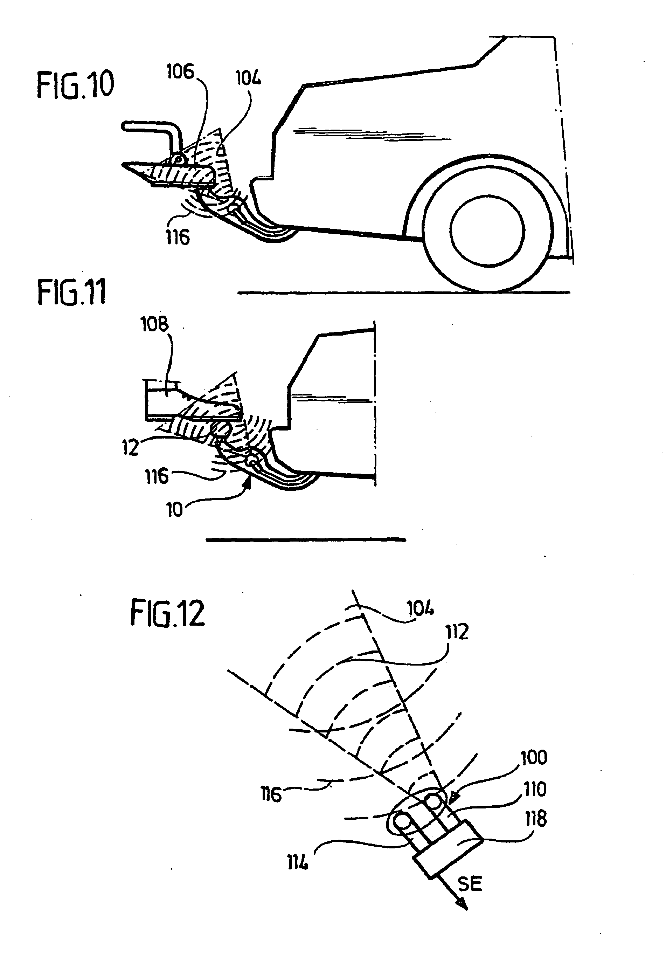

Vorzugsweise ist in der Abschlußkappe 98 ein als Ganzes mit 100 bezeichneter berührungslos arbeitender Sensor vorgesehen, dessen Detektionsseite 102 der Kupplungskugel 12 zugewandt ist, so daß ein von der Detektionsseite 102 ausgehender Erfassungsbereich 104, wie in Fig. 8, 9 und 10 dargestellt, die Kupplungskugel 12 zu wesentlichen Teilen erfaßt, und zwar vorzugsweise so, daß mindestens auf der Hälfte der Oberfläche der Kupplungskugel 12 erkennbar ist, ob auf dieser, wie in Fig. 10 dargestellt, ein Kugelkupplungsstück 106 eines Anhängers angreift und die Kupplungskugel 12 in bekannter Weise umfaßt oder ob die Kupplungskugel 12 anderweitig beaufschlagt ist, beispielsweise durch einen Schuh 108 oder ein anderes Objekt. (Fig. 11)

Hierzu umfaßt der Sensor 100, wie in Fig. 12 dargestellt, einen Sender 110, welcher in dem beispielsweise kegelförmigen Erfassungsbereich 104 sich in Luft ausbreitende Ultraschallwellenimpulspakete 112 aussendet, während ein außerdem im Sensor 100 vorgesehener Detektor 114 reflektierte, rücklaufende Ultraschallwellenimpulspakete 116 detektiert.

Ferner umfaßt der Sensor 100 weiter eine Auswerteelektronik 118, welche durch Auswertung des vom Detektor 114 erzeugten Signals in Relation zur Aktivität des Senders 110 in der Lage ist, festzustellen, ob die Kupplungskugel 12, wie in Fig. 8, 9 dargestellt, frei von äußerer Einwirkung ist oder ob an dieser das Kugelkupplungsstück 106 oder der Gegenstand 108 angreifen, da sich durch ein an der Kupplungskugel 12 angreifendes Objekt die Laufzeit der reflektierten Ultraschallwellenimpulspakete 116, die auf den Detektor 114 auftreffen, ändert.

Aufgrund der sich veränderten Laufzeit der reflektierten Ultraschallwellenimpulspakete 116 ist die Auswerteelektronik 118 in der Lage, ein Detektorsignal SE abzugeben, welches die vorhandene oder nicht vorhandene Einwirkung auf die Kupplungskugel 12 meldet.

Alternativ dazu besteht die Möglichkeit, als Sender 110' einen Ultraschallwandler einzusetzen, der zum Senden der Ultraschallwellen 112 als Sender und zum Detektieren der rückreflektierten Ultraschallwellenimpulspakete 116' als Detektor betreibbar ist.

Alternativ zum Vorsehen eines Ultraschallwellen 112 aussendenden Senders 110 und eines Ultraschallwellen 116 detektierenden Detektors 114 ist es ebenfalls denkbar, Infrarotstrahlung mit einem entsprechenden Sender 110 auszusenden und die Infrarotstrahlung mit einem entsprechend anderen Detektor 114 zu detektieren oder Radarwellen auszusenden und diese zu detektieren.

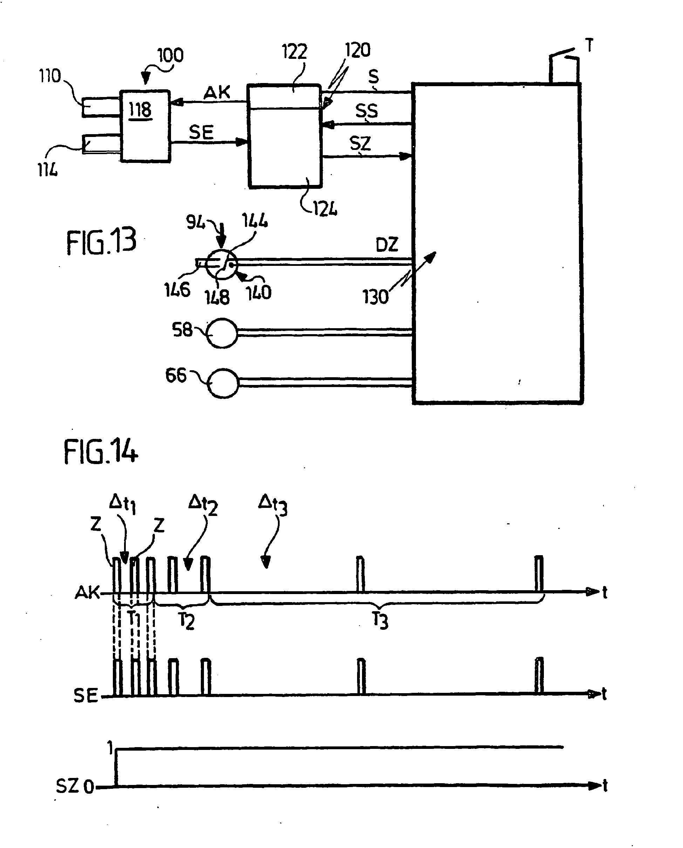

Die Auswerteelektronik 118 ist, wie in Fig. 13 dargestellt, mit einer Sensorsteuerschaltung 120 verbunden, welche den Sensor 100 betreibt und hierfür beispielsweise ein den Sensor 100 aktivierendes Signal AK der Auswerteelektronik 118 dann übermittelt, wenn der Sensor 100 überprüfen soll, ob die Kupplungskugel 12 durch einen Gegenstand beaufschlagt ist oder nicht.

Die Sensorsteuerschaltung 120 ist dabei in der Lage, während definierter Detektionszeitintervalle Z mit dem Signal AK den Sender 100 zu aktivieren, so daß beispielsweise während der definierten Detektionszeitintervalle Z der Sender 110 die Ultraschallwellen 112 aussendet.

Je nach dem, ob die Kupplungskugel durch einen Gegenstand beaufschlagt ist oder nicht, ermittelt die Auswerteelektronik 118 aufgrund des vom Detektor 114 empfangenen Signals, ob die Kupplungskugel 12 durch ein Objekt beaufschlagt ist oder nicht. Ist dies der Fall, so erhält, wie exemplarisch in Fig. 14 dargestellt, die Sensorsteuerschaltung 120 stets dann das von 0 verschiedene Detektorsignal SE übermittelt, wenn sie ihrerseits mit dem Signal AK den Sensor 100 aktiviert.

Die Sensorsteuerschaltung 120 umfaßt ihrerseits eine Taktgeberstufe 122, welche Zeitintervalle Δt festlegt, die zwischen den einzelnen, aufeinanderfolgenden, während der Detektionszeitintervalle Z existenten Signale AK liegen.

Dabei sind die Zeitintervalle Δt mit unterschiedlicher Länge einstellbar.,

Ist die Sensorsteuerschaltung 120 beispielsweise mittels eines Startsignal S aktiviert worden, so geht sie in ihren aktiven Zustand oder Mode über und in diesem generiert die Taktgeberstufe 122 die Signale AK mit zwischen diesen liegenden Zeitintervallen Δt₁, die die kürzest möglichen sind.

Nach Ablauf eines gewissen, jedoch festlegbaren Zeitraum T1 ändert die Taktgeberstufe 122 jedoch die Zeitintervalle Δt zu größeren Werten, so daß diese nunmehr die Signale AK mit zwischen diesen liegenden Zeitintervallen Δt₂ abgibt, wobei diese Zeitintervalle Δt₂ größer sind als die Zeitintervalle Δt₁.

Dies erfolgt während eines Zeitraums T₂.

Sobald die Zeiträume T₁ und T₂ verstrichen sind, ändert die Taktgeberstufe 122 nochmals die Zeitintervalle Δt zu noch größeren Werten, nämlich zu den Werten Δt₃ und sendet somit während eines Zeitraums T₃ die Signale AK in noch größeren Zeitabständen zum Sensor 100.

Damit wird insgesamt nach einem Startsignal S während des ersten Zeitraums T₁ die Kupplungskugel 12 sehr häufig durch den Sensor 100 überprüft, während der Häufigkeit der Überprüfungen der Kupplungskugel 12 während des Zeitraums T₂ geringer wird und während des Zeitraums T₃ noch geringer wird.

Nach Verstreichen des Zeitraums T₃ gibt die Taktgeberstufe 122 keine Signale AK mehr ab und somit geht die Taktgeberstufe 122 der Sensorsteuerschaltung 120 in ihren inaktiven Zustand oder inaktiven Mode über.

Zusätzlich zur Taktgeberstufe 122 umfaßt die Sensorsteuerschaltung 120 auch noch eine Speicherstufe 124, welche, das von der Auswerteelektronik 118 abgegebene Detektorsignal SE so lange speichert, bis eine erneute Aktivierung des Sensors 100 mittels des Signals AK erfolgt ist und die Auswerteelektronik 118 durch das Signal SE anzeigt, ob die Kupplungskugel 12 durch ein Objekt, wie beispielsweise das Kugelkupplungsstück 106, beaufschlagt ist oder nicht.

Diese Speicherstufe 124 speichert jeweils den vom Sensor 100 erfaßten Einwirkungszustand bis zur erneuten Abfrage durch den Sensor 100, so daß, wie in Fig. 14 dargestellt, die Speicherstufe 124 in der Lage ist, ein Zustandssignal SZ zu erzeugen, mittels welchem zu jedem Zeitpunkt t festgestellt werden kann, ob die Kupplungskugel 12 durch ein Objekt beaufschlagt ist oder nicht.

Dieses Zustandssignal SZ ist beispielsweise von einer Steuerung 130 der Anhängevorrichtung abfragbar, die damit in der Lage ist, zu entscheiden, ob überhaupt der Kugelhals 10 aus der Arbeitsstellung A herausgeschwenkt werden darf oder nicht.

Die Steuerung 130 umfaßt dabei beispielsweise einen Starttaster T, mit welchem eine Bewegung des Kugelhalses 10 zwischen der Arbeitsstellung A und der Ruhestellung R auslösbar ist. Das heißt, wenn der Taster T in der Ruhestellung R des Kugelhalses 10 gedrückt wird, erfolgt ein Verschwenken des Kugelhalses 10 von der Ruhestellung R in die Arbeitsstellung A, wird dagegen der Taster T in der Arbeitsstellung A gedrückt, so erfolgt ein Verschwenken des Kugelhalses 10 von der Arbeitsstellung A in die Ruhestellung R.

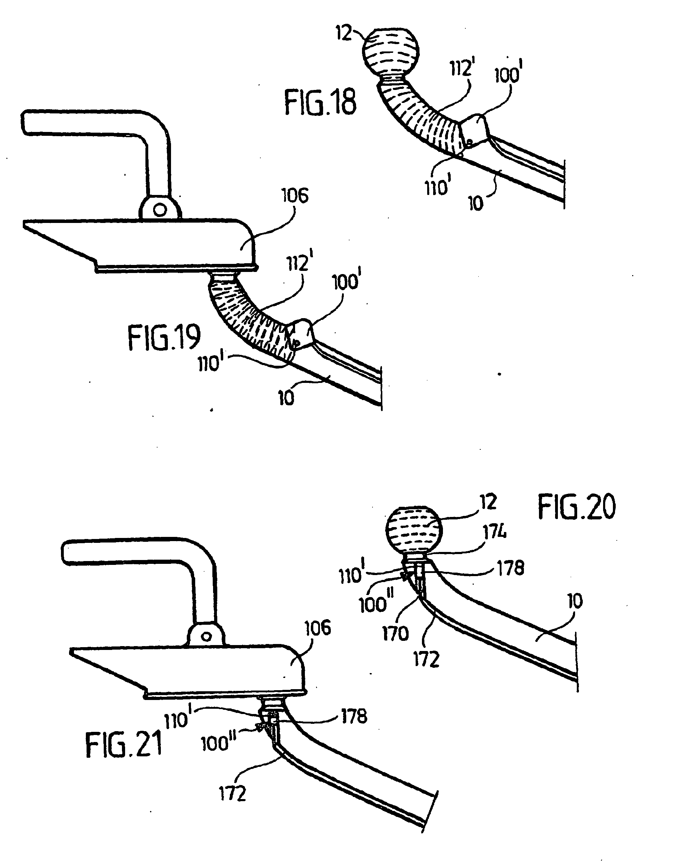

Steht beispielsweise der Kugelhals 10 in der Arbeitsstellung A und erfolgt eine Betätigung des Tasters T, so übermittelt die Steuerung 130 das Startsignal S der Taktgeberstufe 122, die dann während des Zeitraums T₁ zunächst mit kurzen Intervallen Δt₁ das Signal AK zur Aktivierung des Sensors 100 abgibt, und gleichzeitig das Signal SE des Sensors 100 speichert, so daß der Steuerung 130 das Zustandssignal SZ, welches den Einwirkungszustand der Kupplungskugel 12 anzeigt, zur Verfügung steht (Fig. 19).

Ist die Kupplungskugel 12 durch ein Objekt beaufschlagt, so erkennt die Steuerung 130 aufgrund des Zustands 1 des Zustandssignals SZ dies und verhindert ein Aktivieren des Antriebs 58 zum Lösen der Fixierung des Kugelhalses 10 in der Arbeitsstellung A und außerdem wird auch ein Ansteuern des Schwenkantriebs 66 zum Verschwenken des Kugelhalses 10 verhindert.

Nur für den Fall, daß die Steuerung 130 erkennt, daß das Zustandssignal SZ nach einem Betätigen des Tasters T Null ist, wird die Steuerung 130 zunächst den Antrieb 58 zum Lösen der Fixierung des Kugelhalses 10 in der Arbeitsstellung A ansteuern, dann noch mal das Zustandssignal SZ abfragen und erst dann, wenn sicher ist, daß die Kupplungskugel 12 nicht durch ein Objekt beaufschlagt ist, den Schwenkantrieb 66 ansteuern, um den Kugelhals 10 aus der Arbeitsstellung A in Richtung der Ruhestellung R zu verschwenken.

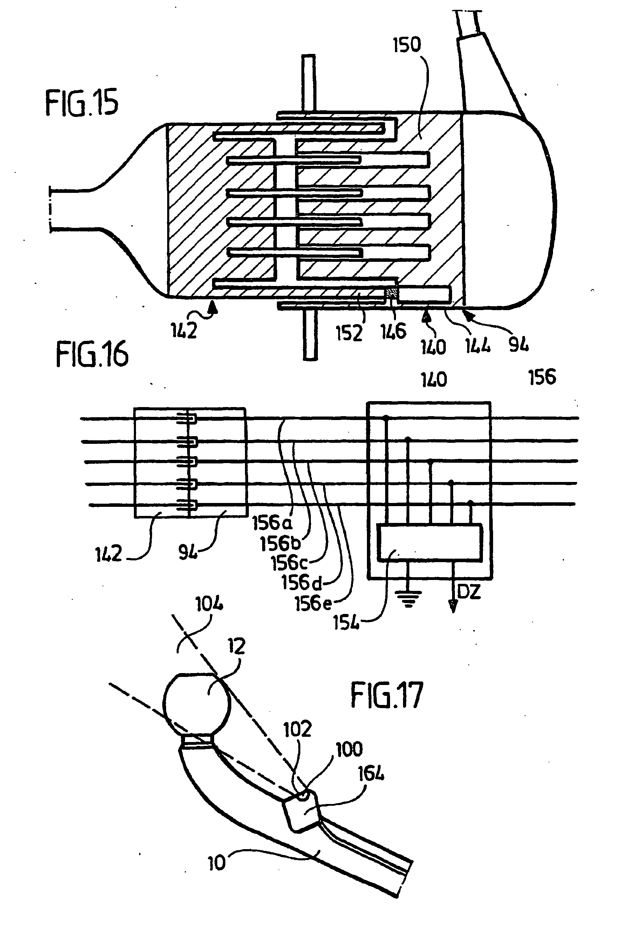

Ferner ist bei einer bevorzugten Variante des ersten Ausführungsbeispiels noch zusätzlich in der Steckdose 94 ein Sensor 140 vorgesehen, welcher überprüft, ob ein Stecker 142 eines Anhängers in die Steckdose 94 eingesteckt ist (Fig. 13 und 15).

Beispielsweise ist der Sensor 140 als Tastschalter 144 oder Taster ausgebildet, und es erfolgt beim Einstecken des Steckers 142 in die Steckdose 94 eine Betätigung einer Tastnase 146 des Tastschalters 144, welcher einen Schaltkontakt 148 schließt, der somit bei in die Steckdose 94 eingestecktem Stecker 142 der Steuerung 130 ein Zustandssignal DZ meldet. In diesem Zustand der Steckdose 94 kann parallel und unabhängig von der Beaufschlagung der Kupplungskugel 12 die Steuerung 130 hinsichtlich einer Aktivierung des Antriebs 58 oder des Schwenkantriebs 66 blockiert sein, vorzugsweise ist die Steuerung 130 hinsichtlich der Aktivierung des Antriebs 58 oder des Schwenkantriebs 66 blockiert.

Zweckmäßigerweise sitzt der Tastschalter 144 hierzu in einem Kontaktsockel 150 der Steckdose 94 und wird durch einen Vorsprung 152 des Steckers 142 beaufschlagt, wobei der Vorsprung 152, wie in Fig. 15 dargestellt, die äußere Hülse des Steckers 142 sein kann, es ist aber auch denkbar, als Vorsprung einen zusätzlichen Stift des Steckers 142 vorzusehen, welcher auf die Tastnase 146 einwirkt

Alternativ dazu ist es auch denkbar, den Sensor 140 nicht als Tastschalter 144 auszubilden, sondern als Näherungsschalter, welcher den in die Steckdose 94 eingesteckten Stecker 142 berührungslos erkennt.

Bei einem weiteren Ausführungsbeispiel des Sensors 140 ist, wie in Fig. 16 dargestellt, der Sensor 140 als Erkennungsschaltung 154 für anhängeseitige elektrische Lasten ausgebildet, welche somit erkennt, ob aufgrund des in die Steckdose 94 eingesteckten Steckers 142 an den einzelnen elektrischen Kontakten die üblichen elektrischen Lasten, z. B. durch die Rückleuchten und Blinkleuchten, vorhanden sind.

Die Erkennungsschaltung 154 erzeugt das Zustandssignal dann, wenn diese Lasten vorhanden sind, denn damit ist sichergestellt, daß nicht nur irgendein Stecker 142 in die Steckdose 94 eingesteckt ist, sondern der Stecker 142 tatsächlich mit den in einem Anhänger üblichen elektrischen Lasten verbunden ist.

Die Erkennungsschaltung 154 läßt sich besonders einfach dadurch realisieren, daß diese jede der Leitungen 156, die zur Steckdose 94 führen, anzapft und deren Widerstand gegen Masse mißt, der dann dem für die typische elektrische Last im Anhänger entsprechenden Widerstand entsprechen muß.

Vorzugsweise ist die Erkennungsschaltung 154 so geschaltet, daß sie bei bereits einer vorhandenen elektrischen Last zwischen einer der Leitungen 156 und Masse das Zustandssignal DZ abgibt, so daß dieses Zustandssignal auch beispielsweise bei einer beschädigten Anhängerleuchte abgegeben wird.

Der als Erkennungsschaltung 154 ausgebildete Sensor 140 kann an beliebiger Stelle einer Versorgung 158 der Anhängersteckdose 94 angeordnet sein und muß somit nicht zwingend in der Anhängersteckdose 94 selbst angeordnet sein, wobei die Anordnung der Erkennungsschaltung 154 zwischen den mit den einzelnen Leitungen 156 verbundenen Schaltern zum Bestromen der verschiedenen Leitungen 156 und der Steckdose 94 angeordnet sein muß.

Darüber hinaus schaltet die Steuerung 130 die Sensorsteuerschaltung 120 und somit den Sensor 100 mittels eines Schaltsignals SS zumindest dann aus, wenn der Kugelhals 10 in der Ruhestellung R oder zumindest nahe der Ruhestellung R steht, um zu verhindern, daß beim Einfahren in die Ruhestellung R der Sensor 100 fälschlicherweise eine Beaufschlagung der Kupplungskugel 12 meldet, obwohl dies nicht der Fall ist, sondern lediglich der Erfassungsbereich 104 beispielsweise Karosserieteile oder andere Gegenstände auf dem Weg in die Ruhestellung erfaßt.

Die Sensorsteuerschaltung 120 und somit auch der Sensor 100 werden durch das Schaltsignal SS zumindest dann eingeschaltet, wenn der Kugelhals 10 in der Arbeitsstellung A steht. Es ist aber auch möglich, die Sensorsteuerschaltung 120 bereits in allen Stellungen des Kugelhalses einzuschalten, die nahe der Arbeitsstellung A sind oder die zwischen einer unteren Totpunktstellung U der Kupplungskugel 12, in welcher diese der Fahrbahn 18 am nächsten kommt, und der Arbeitsstellung A liegen, so daß beispielsweise bereits beim Einschwenken in die Arbeitsstellung A erkannt werden kann, wenn das zum Ankoppeln des Anhängers bereitgestellte Kugelkupplungsstück 106 in den Bewegungsbereich der Kupplungskugel 12 kommt und die Kupplungskugel 12 beispielsweise mit diesem Kugelkupplungsstück 106 vor Erreichen der Arbeitsstellung A oder in der Arbeitsstellung A kollidieren würde.

Gleichzeitig mit dem Einschalten der Sensorsteuerschaltung 120 über das Schaltsignal SS durch die Steuerung 130 erfolgt auch die Übermittlung des Startsignals S an die Taktgeberstufe 122 der Sensorsteuerschaltung 120 und somit während des Zeitraums T₁ die häufige Aktivierung des Sensors 100 mit dem Signal AK, wobei sich die Häufigkeit, wie bereits beschrieben, ohne daß ein neues Startsignal S der Sensorsteuerschaltung 120 übermittelt wird, in den Zeiträumen T₂ und T₃ reduziert wird und nach dem Zeitraum T₃ die Überwachung der Kupplungskugel 12 mittels des Sensors 100 durch Übergang der Sensorsteuerschaltung in den inaktiven Mode vollständig eingestellt wird.

Wird somit beispielsweise der Kugelhals 10 von der Ruhestellung R in die Arbeitsstellung A verschwenkt, so erfolgt spätestens bei Erreichen der Arbeitsstellung A durch das Startsignal SS ein Starten der Sensorsteuerschaltung 120 und, da davon auszugehen ist, daß innerhalb einer nennenswert kurzen Zeit ein Anhängen eines Anhängers durch Aufsetzen des Kugelkupplungsstücks 106 auf die Kupplungskugel 12 erfolgt, erfolgt ein häufiges Aktivieren des Sensors 100 mittels des Signals AK.

Wird dabei festgestellt, daß das Kugelkupplungsstück 106 aufgesetzt ist, so speichert die Speicherstufe 124 das dem aufgesetzten Kugelkupplungsstück 106 entsprechende Detektionssignal SE, so daß der Steuerung 130 stets das Zustandssignal SZ gleich 1 gemeldet wird, welches dokumentiert, daß ein Gegenstand auf die Kupplungskugel 12 einwirkt.

Da die Speicherstufe 124 der Sensorsteuerschaltung 120 dieses Zustandssignal SZ so lange hält, bis der Sensor 100 wiederum detektiert, daß kein Objekt auf die Kupplungskugel 12 einwirkt, ist für alle späteren Zeiten bis zum Lösen des Kugelkupplungsstücks 106 von der Kupplungskugel 12 die Steuerung 130 in einem Zustand, in welchem keinerlei Aktivierung des Antriebs 58 oder des Schwenkantriebs 66 erfolgen kann.

Bei der erfindungsgemäßen Lösung ist das Startsignal S nicht zwingend an das Signal des Tasters T oder das Erreichen der Arbeitsstellung gekoppelt, sonder das Signal S kann beispielsweise auch durch erneutes Starten des Kraftfahrzeugs oder bestimmte Fahrzustände, das heißt beispielsweise ein Rückwärtsfahren des Kraftfahrzeugs, der Sensorsteuerschaltung 120 übermittelt werden, um ein Überprüfen einer möglichen Einwirkung auf die Kupplungskugel 12 zu veranlassen.

Bei einer Variante des ersten Ausführungsbeispiels kann der Sensor 100 anstatt mit Ultraschall zu arbeiten, auch mit Infrarotstrahlung arbeiten und somit Infrarotstrahlung aussenden und die rückreflektierte Infrarotstrahlung, insbesondere die aus dem Bereich der Kupplungskugel 12 rückreflektierte Infrarotstrahlung detektieren.

In diesem Fall ist somit der Sender 110 ein Infrarotsender und der Detektor 104 ein Infrarotdetektor.

Ferner ist es auch denkbar, den Sensor 100 als Radarsensor auszubilden, der elektromagnetische Wellen im Frequenzbereich von Radar aussendet und empfängt.

Alternativ zum ersten Ausführungsbeispiel ist es, wie in Fig. 17 dargestellt, bei einem zweiten Ausführungsbeispiel denkbar, den Kugelhals 10 auch ohne Steckdose 94 zu versehen und auf diesen ein Sensorgehäuse 164 aufzusetzen, in welchem der Sensor 100 angeordnet ist.

Ein derartiges Sensorgehäuse 164 läßt sich vorzugsweise so plazieren, daß der Erfassungsbereich 104 einen dem Kraftfahrzeug 16 zugewandten Oberflächenbereich der Kupplungskugel 12 im wesentlichen vollständig überprüfen kann.

Bei einem dritten Ausführungsbeispiel einer erfindungsgemäßen Anhängevorrichtung, dargestellt in Fig. 18 und 19, ist der Sender 110' des Sensors 100' in eine Öffnung des Kugelhalses 10 eingesetzt und erzeugt durch Ankopplung an den Kugelhals 10 im Kugelhals 10 Körperschall mit Ultraschallwellen 112', welche sich in Richtung der Kupplungskugel 12 ausbreiten, wobei das gekoppelte System aus Sender 110', Kugelhals 10 und Kupplungskugel 12 im Bereich seiner Resonanzfrequenz bei Ulltraschall betrieben wird, dabei werden Amplitude und Frequenz der Ultraschallwellen des Körperschalls detektiert, deren Intensität und/oder Frequenz sich ändert, wenn auf der Kupplungskugel das Kugelkupplungsstück 106 aufsitzt oder ein übriges Objekt einwirkt.

Bei einem vierten Ausführungsbeispiel, dargestellt in Fig. 20 und Fig. 21, ist der Sensor 100" in einer Bohrung 170 im Kugelhals 10 angeordnet, welche von einer Unterseite 172 des Kugelhalses 10 koaxial zur Kupplungskugel 12 in diesen eingeführt ist und beispielsweise vor einer an die Kupplungskugel 12 angrenzenden Einschnürung 174 endet, so daß im Bereich der Einschnürung 174 und der Kupplungskugel 12 keine Schwächung des Materials erfolgt.

In dieser Bohrung 170 sitzt dabei möglichst nahe der Kupplungskugel 12 der Sensor 100", welcher einen Ultraschallwandler 110' umfaßt, der von einer Ansteuerschaltung 178 bei einer Resonanzfrequenz des gekoppelten Systems aus Ultraschallwandler 110' und ausgekoppelter Umgebung betrieben wird, wobei die detektierte Resonanzfrequenz des Wandlers 176 von der angrenzenden Umgebung, d. h. dem umgebenden Abschnitt des Kugelhalses 10 und der Kupplungskugel 12, abhängt, da sich in diesen die Ultraschallwellen des Ultraschallwandlers 110' ausbreiten.

Greift nun an der Kupplungskugel 12 das Kugelkupplungsstück 106 des Anhängers an, so werden die Resonanzverhältnisse des Wandlers 110' geändert, wobei entweder eine Veränderung der Lage der Resonanzfrequenz oder eine Veränderung der Resonanzamplitude, in vielen Fällen eine Veränderung von beiden, eintritt, und diese Veränderung führt zur Erzeugung des Detektorsignals SE, das dann nachfolgend in gleicher Weise weiterbehandelt wird wie das Detektorsignal SE des Sensors 100.

Im übrigen ist das Funktionsprinzip des dritten und vierten Ausführungsbeispiels mit denen der voranstehenden Ausführungsbeispiele vergleichbar, so daß auf die Ausführungen zur Funktion im Detail vollinhaltlich auf die Ausführungen zu den voranstehenden Ausführungsbeispielen Bezug genommen werden kann.

## Patentansprüche

1. Anhängevorrichtung für Kraftfahrzeuge (16) umfassend einen an einer fahrzeugfesten Aufnahme (30) gehaltenen Kugelhals (10), der an seinem der Aufnahme (30) abgewandten Ende eine Kupplungskugel (12) trägt, einen Sensor (100, 100', 100", 100"") zum Erkennen eines an der Kupplungskugel (12) angreifenden Objekts (106, 108), welcher bei Existenz eines an der Kupplungskugel (12) angreifenden Objekts ein dieses meldendes Signal erzeugt,
**dadurch gekennzeichnet, dass** der Sensor (100, 100', 100", 100"") am Kugelhals (10) angeordnet ist und dass dem Sensor (100, 100', 100") eine Sensorsteuerschaltung (120) zugeordnet ist,
welche den Sensor (100) während Detektionszeitintervallen (Z) aktiviert, den vom aktivierten Sensor (100) erfassten Einwirkungszustand (SZ) speichert und anschließend den Sensor (100) deaktiviert und dass der Sensor (100, 100', 100") berührungslos arbeitet, wobei der Sensor (100) als optischer Sensor oder als Radarsensor oder als Ultraschallsensor arbeitet.

2. Anhängevorrichtung nach Anspruch 1, **dadurch gekennzeichnet, dass** der Sensor (100') in einem auf den Kugelhals (10) aufgesetzten Gehäuse (134) angeordnet ist.

3. Anhängevorrichtung nach einem der voranstehenden Ansprüche,
**dadurch gekennzeichnet, dass** der Sensor (100) im Bereich einer Steckdose (94) angeordnet ist.

4. Anhängevorrichtung nach Anspruch 3, **dadurch gekennzeichnet, dass** der Sensor (100) in die Steckdose (94) integriert ist.

5. Anhängevorrichtung nach Anspruch 1, **dadurch gekennzeichnet, dass** der Sensor (100") im Kugelhals (10) angeordnet ist.

6. Anhängevorrichtung nach einem der voranstehenden Ansprüche,
**dadurch gekennzeichnet, dass** der Sensor (100, 100"") über einen seitlich des Kugelhalses (10) in Richtung der Kupplungskugel (12) verlaufenden Erfassungsbereich die Kupplungskugel (12) erfasst.

7. Anhängevorrichtung nach einem der Ansprüche 1 bis 5, **dadurch gekennzeichnet, dass** der Sensor (100', 100") das an der Kupplungskugel (10) angreifende Objekt (106, 108) über den sich zwischen dem Sensor (100', 100") und der Kupplungskugel (12) erstreckenden Abschnitt des Kugelhalses (10) detektiert.

8. Anhängevorrichtung nach einem der voranstehenden Ansprüche,
**dadurch gekennzeichnet, dass** der Sensor (100, 100') einen Sender (110) und einen Detektor (114) umfasst.

9. Anhängevorrichtung nach einem der Ansprüche 1 bis 7, **dadurch gekennzeichnet, dass** der Sensor (100, 100', 100") einen einzigen Wandler (110, 110') umfasst.

10. Anhängevorrichtung nach Anspruch 9, **dadurch gekennzeichnet, dass** der Wandler (110) als Sender oder Empfänger betreibbar ist.

11. Anhängevorrichtung nach Anspruch 9, **dadurch gekennzeichnet, dass** der Wandler (110) bei einer Resonanzfrequenz von Wandler (110') und Umgebung (10, 12) betreibbar ist.

12. Anhängevorrichtung nach einem der voranstehenden Ansprüche,
**dadurch gekennzeichnet, dass** das von dem Sensor (100, 100', 100", 100"") detektierbare Objekt ein Kugelkupplungsstück (106) ist.

13. Anhängevorrichtung nach einem der voranstehenden Ansprüche,
**dadurch gekennzeichnet, dass** die Sensorsteuerschaltung (120) den vom aktivierten Sensor (100, 100', 100") erfassten Einwirkungszustand (SZ) so lange speichert, bis eine erneute Aktivierung des Sensors (100) erfolgt.

14. Anhängevorrichtung nach einem der voranstehenden Ansprüche,
**dadurch gekennzeichnet, dass** die Sensorsteuerschaltung (120) nach einem festlegbaren Zeitintervall (Δt) den Sensor (100) selbständig erneut aktiviert und den von diesem erfassten Einwirkungszustand (SZ) speichert.

15. Anhängevorrichtung nach Anspruch 14, **dadurch gekennzeichnet, dass** die Sensorsteuerschaltung (120) das Zeitintervall (Δt) nach festlegbaren Zeiträumen (T) verändert.

16. Anhängevorrichtung nach Anspruch 14 oder 15, **dadurch gekennzeichnet, dass** die Sensorsteuerschaltung (120) nach Ablauf eines aktiven Modes in einen inaktiven Mode übergeht, in welchem keine selbständige Aktivierung des Sensors (100, 100', 100") mehr erfolgt.

17. Anhängevorrichtung nach einem der Ansprüche 14 bis 16, **dadurch gekennzeichnet, dass** die Sensorsteuerschaltung (120) das Zeitintervall (Δt) ereignisabhängig festlegt.

18. Anhängevorrichtung nach einem der voranstehenden Ansprüche, **dadurch gekennzeichnet, dass** die Anhängevorrichtung eine Fixiereinrichtung (58, 70, 80) aufweist, welche zur Fixierung des Kugelhalses (10) in der Arbeitsstellung (A) aktivierbar und zum Lösen der Fixierung deaktivierbar ist.

19. Anhängevorrichtung nach einem der voranstehenden Ansprüche, **dadurch gekennzeichnet, dass** der Kugelhals (10) mittels eines Antriebs (66) zwischen einer Arbeitsstellung (A) und einer Ruhestellung (R) bewegbar und in der Arbeitsstellung (A) mit der Fixiereinrichtung (58, 70, 80) festlegbar ist, dass eine Steuerung (130) vorgesehen ist, mit welcher die Bewegung und Fixierung steuerbar sind, und dass die Steuerung (130) ein Zustandssignal (SZ) des Sensors (100, 100', 100", 100"', 100"") erfasst und bei Vorliegen eines einem an der Kupplungskugel (12) einwirkenden Objekts (106, 108) entsprechenden Zustandssignals (SZ=1) ein Lösen der Fixierung in der Arbeitsstellung (A) nicht zulässt.

## Claims

1. Trailer coupling apparatus for motor vehicles (16) comprising a ball neck (10), which is held on a vehicle-fixed holder (30) and which on its end remote from the holder (30) carries a coupling ball (12), a sensor (100, 100', 100", 100"") for sensing an object (106, 108) acting upon the coupling ball (12),the sensor, when an object acts upon the coupling ball (12), generating a signal indicating this,
**characterised in that** the sensor (100,100',100",100"") is arranged on the ball neck (10) and **in that** there is associated with the sensor (100, 100', 100") a sensor control circuit (120), which activates the sensor (100) during detection time intervals (Z), stores the influence state (SZ) sensed by the activated sensor (100) and then deactivates the sensor (100) and **in that** the sensor (100, 100', 100") operates without contract, wherein the sensor (100) operates as an optical sensor, as a radar sensor, or as an ultrasonic sensor.

2. Trailer coupling apparatus according to claim 1,
**characterised in that** the sensor (100') is disposed in a housing (134) mounted onto the ball neck (10).

3. Trailer coupling apparatus according to one of the preceding claims, **characterised in that** the sensor (100) is disposed in the region of a socket-outlet (94).

4. Trailer coupling apparatus according to claim 3,
**characterised in that** the sensor (100) is integrated into the socket-outlet (94).

5. Trailer coupling apparatus according to claim 1,
**characterised in that** the sensor (100") is disposed in the ball neck (10).

6. Trailer coupling apparatus according to one of the preceding claims, **characterised in that** the sensor (100,100"") senses the coupling ball (12) over a sensing range extending laterally of the ball neck (10) in the direction of the coupling ball (12).

7. Trailer coupling apparatus according to one of the claims 1 to 5, **characterised in that** the sensor (100', 100") detects the object (106, 108), which is acting upon the coupling ball (10), over the portion of the ball neck (10) extending between the sensor (100', 100") and the coupling ball (12).

8. Trailer coupling apparatus according to one of the preceding claims, **characterised in that** the sensor (100, 100') comprises a transmitter (110) and a detector (114).

9. Trailer coupling apparatus according to one of the claims 1 to 7, **characterised in that** the sensor (100, 100', 100") comprises a single transducer (110, 110')

10. Trailer coupling apparatus according to claim 9,
**characterised in that** the transducer (110) is operable as a transmitter or receiver.

11. Trailer coupling apparatus according to claim 9,
**characterised in that** the transducer (110) is operable with a resonant frequency of transducer (110') and surrounding region (10, 12).

12. Trailer coupling apparatus according to one of the preceding claims, **characterised in that** the object detectable by the sensor (100, 100', 100", 100"") is a ball coupling piece (106).

13. Trailer coupling apparatus according to one of the preceding claims, **characterised in that** the sensor control circuit (120) stores the influence state (SZ) sensed by the activated sensor (100, 100', 100") until a reactivation of the sensor (100) is effected.

14. Trailer coupling apparatus according to one of the preceding claims, **characterised in that** the sensor control circuit (120) after a definable time interval (Δt) automatically reactivates the sensor (100) and stores the influence state (SZ) sensed thereby.

15. Trailer coupling apparatus according to claim 14,
**characterised in that** the sensor control circuit (120) varies the time interval (Δt) after definable periods (T).

16. Trailer coupling apparatus according to claim 14 or 15, **characterised in that** the sensor control circuit (120) after execution of an active mode changes over to a inactive mode, in which automatic activation of the sensor (100, 100', 100") is no longer effected.

17. Trailer coupling apparatus according to one of the claims 14 to 16, **characterised in that** the sensor control circuit (120) defines the time interval (Δt) in an event-dependent manner.

18. Trailer coupling apparatus according to one of the preceding claims, **characterised in that** the trailer coupling apparatus comprises a fixing device (58, 70, 80), which can be actuated for fixing the ball neck (10) in the operating position (A) and can be deactuated to release the fixing.

19. Trailer coupling apparatus according to one of the preceding claims, **characterised in that** the ball neck (10) is movable by means of an actuator (66) between an operating position (A) and an inoperative position (R) and is lockable in the operating position (A) by means of the fixing device (58, 70, 80), **in that** a controller (130) is provided, by means of which the movement and locking are controllable, and **in that** the controller (130) senses a state signal (SZ) of the sensor (100, 100', 100", 100'", 100"") and in the presence of a state (SZ = 1) corresponding to an object (106, 108) acting on the coupling ball (12), does not allow a release of the locking in the operating position (A).

## Revendications

1. Dispositif d'attelage pour véhicules automobiles (16) comprenant une gorge de boule d'attelage (10) tenue sur un logement (30) solidaire du véhicule, qui porte sur son extrémité opposée au logement (30) une boule d'attelage (12), un capteur (100, 100', 100", 100"") pour la reconnaissance d'un objet (106, 108) s'appliquant sur la boule d'attelage (12), lequel génère en la présence d'un objet s'appliquant sur la boule d'attelage (12) un signal signalant cet objet, **caractérisé en ce que** le capteur (100, 100', 100", 100"") est disposé sur la gorge de boule d'attelage (10) et **en ce qu'**au capteur (100, 100', 100") est attribué un circuit de commande de capteur (120) qui active le capteur (100) pendant des intervalles de temps de détection (Z), mémorise l'état d'influence (SZ) enregistré par le capteur (100) activé et désactive ensuite le capteur (100) et **en ce que** le capteur (100, 100', 100") travaille sans contact, le capteur (100) travaillant comme capteur optique ou comme capteur radar ou comme capteur à ultrasons.

2. Dispositif d'attelage selon la revendication 1,
**caractérisé en ce que** le capteur (100') est disposé dans un boîtier (134) posé sur la gorge de boule d'attelage (10).

3. Dispositif d'attelage selon l'une des revendications précédentes, **caractérisé en ce que** le capteur (100) est disposé au niveau d'une prise (94).

4. Dispositif d'attelage selon la revendication 3,
**caractérisé en ce que** le capteur (100) est intégré dans la prise (94).

5. Dispositif d'attelage selon la revendication 1,
**caractérisé en ce que** le capteur (100") est disposé dans la gorge de boule d'attelage (10).

6. Dispositif d'attelage selon l'une des revendications précédentes, **caractérisé en ce que** le capteur (100, 100"") détecte la boule d'attelage (12) au moyen d'une zone de détection s'étendant sur le côté de la gorge de boule d'attelage (10) en direction de la boule d'attelage (12).

7. Dispositif d'attelage selon l'une des revendications 1 à 5, **caractérisé en ce que** le capteur (100', 100") détecte l'objet (106, 108) s'appliquant sur la boule d'attelage (12) au moyen de la partie de la gorge de boule d'attelage (10) qui s'étend entre le capteur (100', 100") et la boule d'attelage (12).

8. Dispositif d'attelage selon l'une des revendications précédentes, **caractérisé en ce que** le capteur (100, 100') comprend un émetteur (110) et un détecteur (114).

9. Dispositif d'attelage selon l'une des revendications 1 à 7, **caractérisé en ce que** le capteur (100, 100', 100") comprend un convertisseur (110, 110') unique.

10. Dispositif d'attelage selon la revendication 9, **caractérisé en ce que** le convertisseur (110) peut être exploité comme émetteur ou récepteur.

11. Dispositif d'attelage selon la revendication 9, **caractérisé en ce que** le convertisseur (110) peut être exploité avec une fréquence de résonance de convertisseur (110') et d'environnement (10, 12).

12. Dispositif d'attelage selon l'une des revendications précédentes, **caractérisé en ce que** l'objet détectable par le capteur (100, 100', 100", 100"") est une pièce d'accouplement à boule (106).

13. Dispositif d'attelage selon l'une quelconque des revendications précédentes, **caractérisé en ce que** le circuit de commande de capteur (120) mémorise l'état d'influence (SZ) enregistré par le capteur (100, 100', 100") activé jusqu'à une nouvelle activation du capteur (100).

14. Dispositif d'attelage selon l'une quelconque des revendications précédentes, **caractérisé en ce que** le circuit de commande de capteur (120) active à nouveau spontanément le capteur (100) après un intervalle de temps (Δt) définissable et mémorise l'état d'influence (SZ) détecté par celui-ci.

15. Dispositif d'attelage selon la revendication 14, **caractérisé en ce que** le circuit de commande de capteur (120) modifie l'intervalle de temps (Δt) après des périodes (T) définissables.

16. Dispositif d'attelage selon la revendication 14 ou 15, **caractérisé en ce que** le circuit de commande de capteur (120) passe après l'expiration d'un mode actif dans un mode inactif, dans lequel il n'y a plus d'activation spontanée du capteur (100, 100', 100").

17. Dispositif d'attelage selon l'une quelconque des revendications 14 à 16, **caractérisé en ce que** le circuit de commande de capteur (120) fixe l'intervalle de temps (Δt) en fonction de l'événement.

18. Dispositif d'attelage selon l'une des revendications précédentes, **caractérisé en ce que** le dispositif d'attelage présente un dispositif de fixation (58, 70, 80) qui peut être activé pour la fixation de la gorge de boule d'attelage (10) dans la position de travail (A) et peut être désactivé pour le desserrage de la fixation.

19. Dispositif d'attelage selon l'une quelconque des revendications précédentes, **caractérisé en ce que** la gorge de boule d'attelage (10) peut être déplacée au moyen d'un entraînement (66) entre une position de travail (A) et une position de repos (R) et peut être fixée dans la position de travail (A) avec le système de fixation (58, 70, 80) et **en ce qu'**une commande (130) est prévue, avec laquelle le déplacement et la fixation peuvent être contrôlés, et **en ce que** la commande (130) détecte un signal d'état (SZ) du capteur (100, 100', 100", 100"', 100"") et n'autorise pas un détachement de la fixation dans la position de travail (A) en cas de présence d'un signal d'état (SZ = 1) correspondant à un objet (106, 108) agissant sur la boule d'attelage (12).
